# FASCICULE DE BREVET EUROPEEN

(11) **EP 1 207 713 B1**
(45) Date de publication et mention de la délivrance du brevet: **05.10.2011**
(21) Numéro de dépôt: 01402894.8
(22) Date de dépôt: 12.11.2001
(51) Int. Cl.: H04W 36/14

(54) **Procédé pour le transfert de communication inter-système dans un système cellulaire de radiocommunications mobiles**
Verfahren zum Weiterreichen zwischen verschiedenen Systemen in einem zellularen Mobilfunkkommunikationssystem
Method of conducting an inter-system handoff in a mobile cellular radio communication system

(30) Priorité: 16.11.2000 FR 0014811
(43) Date de publication de la demande: 22.05.2002
(73) Titulaire: Alcatel Lucent, 75008 Paris (FR)
(72) Inventeur: Treillard, Pascal, 91120 Palaiseau (FR)
(74) Mandataire: El Manouni, Josiane

(56) Documents cités:
- EP-A- 0 898 438
- EP-A- 1 006 746
- WO-A-95/08897
- WO-A-97/44984
- US-A- 5 839 070

## Description

La présente invention concerne d'une manière générale les systèmes de radiocommunications mobiles, notamment les systèmes CDMA (pour "Code Division Multiple Access" en anglais).

La technique CDMA est notamment utilisée dans les systèmes dits de troisième génération, tels que notamment le système UMTS (pour "Universal Mobile Telecommunication System"), offrant des services à des débits supérieurs à ceux offerts par les systèmes dits de deuxième génération, tels que notamment le système GSM (pour « Global System for Mobile communication »).

D'une manière générale ces systèmes ont une architecture cellulaire, et des techniques de transfert inter-cellulaire (ou "handover" en anglais) sont prévues pour transférer les communications de cellule à cellule selon les besoins. En outre une technique classiquement utilisée est la technique de transfert inter-cellulaire assisté par la station mobile (ou « MAHO », pour "Mobile Assisted Hand-Over" en anglais) selon laquelle une station mobile effectue des mesures radio sur des canaux de diffusion diffusés dans des cellules voisines de sa cellule serveuse et reporte les résultats de ces mesures radio au réseau, en vue de faciliter la prise de décision de transfert inter-cellulaire par le réseau. La liste des cellules voisines sur lesquelles des mesures sont à effectuer est en général indiquée à la station mobile par le réseau.

Par ailleurs, une technique couramment utilisée dans les systèmes CDMA est la technique dite de transmission en macro-diversité, selon laquelle une station mobile est connectée simultanément à plusieurs stations de base, c'est-à-dire est servie simultanément par plusieurs cellules appelées aussi cellules serveuses (ou cellules actives). Ceci permet notamment, grâce à des techniques appropriées de traitement et de combinaison des différents signaux reçus correspondants, d'améliorer les performances en réception. Ceci permet aussi de minimiser les risques de perte d'appel lors de transferts inter-cellulaires, ou "handovers" en anglais. Pour cette raison cette technique est aussi appelée "soft handover" (en anglais), par opposition à la technique de "hard handover" selon laquelle une station mobile n'est connectée à chaque instant qu'à une seule station de base.

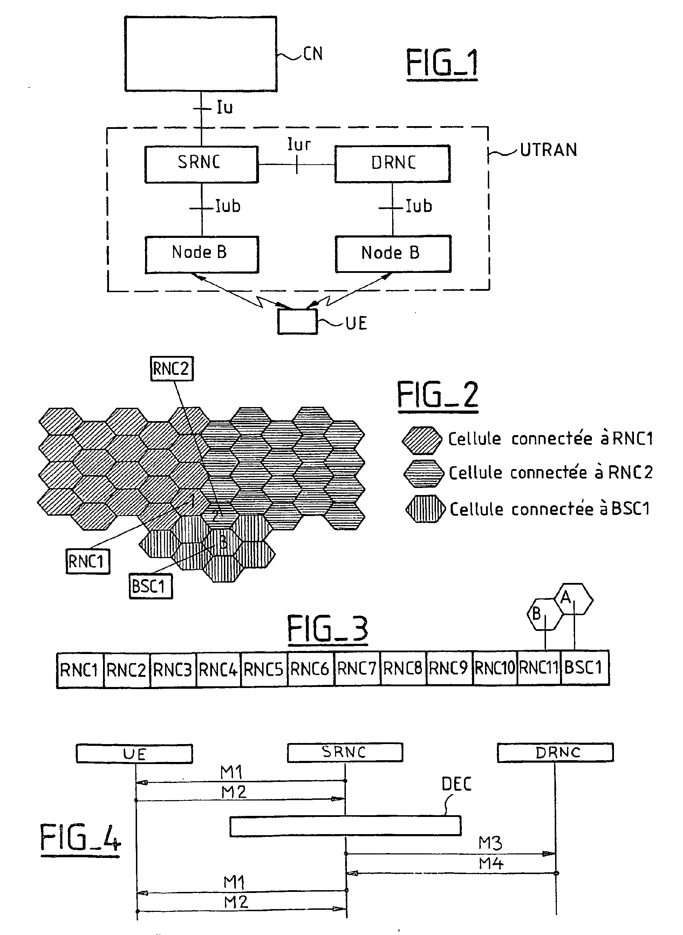

D'une manière générale, un système de radiocommunications mobiles comporte, comme rappelé sur la figure 1, un réseau d'accès radio (ou UTRAN, pour "UMTS Terrestrial Radio Access Network" dans le cas du système UMTS), comportant lui-même un ensemble de stations de base (appelées aussi "Node B" dans l'UMTS), et un ensemble de contrôleurs de stations de base (appelés aussi RNC, pour "Radio Network Controller" dans l'UMTS). L'UTRAN est en relation d'une part avec des stations mobiles (appelées aussi équipements utilisateur, ou "User Equipment" ou UE), et d'autre part avec un coeur de réseau, ou CN (pour « Core Network » en anglais).

Dans le cas de transmission en macro-diversité, les différents Node B auxquels est connecté un UE peuvent ou non être contrôlés par un même RNC. S'ils sont contrôlés par des RNC différents, un de ces RNC, dit RNC serveur, noté SRNC (pour « Serving RNC » en anglais), a un rôle de contrôle pour la communication considérée, incluant des fonctions d'ajout ou de retrait de cellules serveuses, d'établissement de listes actualisées de cellules serveuses et de cellules voisines, de communication de telles listes à l'UE, de centralisation de contrôle de puissance, ...etc. Les Node B connectés à l'UE et non contrôlés par le SRNC communiquent avec le SRNC via les RNC qui les contrôlent, appelés aussi RNC dérivés, ou DRNC (pour « Drift RNC » en anglais). A titre d'exemple, la figure 1 illustre le cas d'un UE connecté à deux Node B contrôlés par deux RNC différents, l'un ayant donc un rôle de SRNC et l'autre un rôle de DRNC.

Ainsi, comme rappelé sur la figure 1, les RNC sont reliés :
- aux Node B par une interface appelée interface « lub »,
- entre eux par une interface appelée « lur »,
- au « Core Network » par une interface appelée interface « lu ».

Dans le cas de transmission en macro-diversité, la liste des cellules voisines tient compte du fait que chaque cellule serveuse a elle-même des cellules voisines. Ainsi, l'établissement de la liste des cellules voisines par le SRNC nécessite que celui-ci connaisse les cellules voisines de cellules qu'il ne contrôle pas lui-même, mais qui sont contrôlées par les DRNC. Les informations dont le SRNC a besoin sur ces cellules voisines, appelées aussi dans ce qui suit informations de voisinage, incluent des paramètres tels que : identification de la cellule voisine, identification du RNC qui la contrôle, niveau de puissance d'émission du canal de diffusion dans cette cellule, ...etc. L'identification d'une cellule voisine est utilisée pour identifier cette cellule dans le processus de communication par le SRNC à l'UE de la liste de cellules voisines sur lesquelles des mesures sont à effectuer, puis de communication par l'UE au SRNC des résultats de mesures. L'identification du RNC qui contrôle une cellule voisine permet au SRNC de contacter, si nécessaire, ce RNC, pour d'une part établir une connexion dans cette cellule, et d'autre part obtenir de ce RNC les cellules voisines de cette cellule, afin de permettre au processus de se poursuivre. Pour le système UMTS par exemple, ces informations de voisinage sont spécifiées dans le document 3G TS 25.423 Version 3.3.0 Release 99, publié par le 3GPP (« 3^{rd} Generation Partnership Project » en anglais).

Deux techniques sont alors possibles. Soit on prévoit directement dans le SRNC (et donc dans chaque RNC, puisque chaque RNC est susceptible de devenir SRNC pour une connexion donnée) toutes les informations de voisinage nécessaires pour répondre à tous les schémas de « handover » possibles, mais cela a essentiellement pour inconvénient d'être relativement coûteux en termes de volume mémoire et de mises à jour d'informations de voisinage dans le cas de changements de configuration du réseau. Soit les DRNC indiquent au SRNC les informations de voisinage sur des cellules voisines de cellules serveuses qu'ils contrôlent, lorsque le SRNC en a besoin, c'est-à-dire en réponse à une demande correspondante faite par le SRNC. Ceci permet d'éviter les inconvénients précédents.

Cette dernière technique est décrite par exemple dans le document WO 00/11878, et est également spécifiée, pour le système UMTS, dans le document 3G TS 25.423 version 3.3.0 Release 1999 déjà cité.

Cependant ces documents sont limités au cas de systèmes homogènes, c'est-à-dire dans lesquels toutes les cellules utilisent la même technique d'accès radio, en l'occurrence la technique CDMA. Ces documents ne traitent pas de systèmes hétérogènes, c'est-à-dire dans lesquels certaines cellules utilisent des techniques d'accès radio autres que la technique CDMA, notamment la technique TDMA (pour « Time Division Multiple Access » en anglais) utilisée dans le système GSM. En d'autres termes, ces documents ne prévoient pas le cas de « handover » inter-système, notamment UMTS vers GSM. Par exemple, dans le document 3G TS 25.423, les informations de voisinage contenues dans les messages de signalisation « Radio Link Setup Response », « Radio Link Setup Failure » ou « Radio Link Addition Response », « Radio Link Addition Failure », transmis dans le sens DRNC vers SRNC, en réponse aux messages de signalisation « Radio Link Setup Request » ou « Radio Link Addition Request » transmis dans le sens SRNC vers DRNC, comportent exclusivement des paramètres caractéristiques de cellules UMTS.

Dans le document US 5 594 718, le cas de « handover » inter-système, d'un premier système utilisant la technique CDMA vers un deuxième système utilisant une technique autre que la technique CDMA est traité de la façon suivante. Le stations de base du deuxième système, situées à la frontière avec le système CDMA, sont adaptées pour générer un signal pilote comme s'il s'agissait de stations de base du système CDMA. La liste des stations de base voisines, communiquée par le système CDMA à une station mobile située dans cette région à la frontière entre les deux systèmes inclut alors de telles stations de base du deuxième système, et lorsque la station mobile reporte les résultats de mesure correspondants au réseau, le réseau CDMA reconnaît qu'il s'agit de stations de base du deuxième système, et le cas échéant, déclenche un « hand-over » vers ce deuxième système. Une telle solution a notamment pour inconvénient de nécessiter une adaptation des stations de base du deuxième système, et donc d'être contraignante et coûteuse.

Un besoin existe donc pour un procédé de « handover » inter-système ne présentant pas les divers inconvénients ou limitations mentionnés précédemment. La présente invention a notamment pour but de répondre à ce besoin.

La présente invention a ainsi pour objet un procédé pour le transfert de communication inter-système, d'un premier système cellulaire de radiocommunications mobiles utilisant la technique de transmission en macro-diversité, vers un second système cellulaire de radiocommunications mobiles, ladite transmission en macro-diversité faisant intervenir un contrôleur de réseau radio du premier système, dit contrôleur serveur, et au moins un autre contrôleur de réseau radio du premier système, dit contrôleur dérivé, ledit procédé étant essentiellement caractérisé en ce que des informations de voisinage relatives au deuxième système sont signalées audit contrôleur serveur par au moins un contrôleur dérivé contrôlant au moins une cellule serveuse appartenant audit premier système et ayant au moins une cellule voisine appartenant audit second système.

Un autre objet de l'invention est un contrôleur de réseau de radiocommunications mobiles, pour système cellulaire de radiocommunications mobiles utilisant la technique de transmission en macro-diversité, ladite transmission en macro-diversité faisant intervenir un contrôleur de réseau radio du premier système, dit contrôleur serveur, et au moins un autre contrôleur de réseau radio du premier système, dit contrôleur dérivé, ce contrôleur étant caractérisé en ce qu'il comporte des moyens pour, dans le cas où il a un rôle de contrôleur dérivé, signaler à un contrôleur ayant le rôle de contrôleur serveur, des informations de voisinage relatives à au moins une cellule voisine d'au moins une cellule serveuse qu'il contrôle, et appartenant à un système différent de celui auquel appartient ladite au moins une cellule serveuse.

Un autre objet de l'invention est un contrôleur de réseau de radiocommunications mobiles, pour système cellulaire de radiocommunications mobiles utilisant la technique de transmission en macro-diversité, ladite transmission en macro-diversité faisant intervenir un contrôleur de réseau radio du premier système, dit contrôleur serveur, et au moins un autre contrôleur de réseau radio du premier système, dit contrôleur dérivé, ce contrôleur étant caractérisé en ce qu'il comporte des moyens pour, dans le cas où il a un rôle de contrôleur serveur, recevoir d'un contrôleur ayant un rôle de contrôleur dérivé, des informations de voisinage relatives à au moins une cellule voisine d'au moins une cellule serveuse contrôlée par ce contrôleur dérivé, et appartenant à un système différent de celui auquel appartient ladite au moins une cellule serveuse.

Suivant une autre caractéristique, ledit premier système est un système de type UMTS (« Universal Mobile Telecommunication System »), et lesdites informations de voisinage relatives au deuxième système sont signalées dans un message de type « Radio Link Setup Response».

Suivant une autre caractéristique, ledit premier système est un système de type UMTS (« Universal Mobile Telecommunication System »), et lesdites informations de voisinage relatives au deuxième système sont signalées dans un message de type « Radio Link Addition Response».

Suivant une autre caractéristique, ledit premier système est un système de type UMTS (« Universal Mobile Telecommunication System »), et lesdites informations de voisinage relatives au deuxième système sont signalées dans un message de type « Radio Link Setup Failure».

Suivant une autre caractéristique, ledit premier système est un système de type UMTS (« Universal Mobile Telecommunication System »), et lesdites informations de voisinage relatives au deuxième système sont signalées dans un message de type « Radio Link Addition Failure».

Suivant une autre caractéristique, ledit deuxième système est un système de type GSM (« Global System for Mobile communication»), et lesdites informations de voisinage relatives au deuxième système comportent des informations de type CGI (« Cell Global Identity »).

Suivant une autre caractéristique, ledit deuxième système est un système de type GSM (« Global System for Mobile communication»), et lesdites informations de voisinage relatives au deuxième système comportent des informations de type BSIC (« Base Station Identity Code »).

Suivant une autre caractéristique, ledit deuxième système est un système de type GSM (« Global System for Mobile communication»), et lesdites informations de voisinage relatives au deuxième système comportent des informations de type BCCH ARFCN (« Broadacst Control Channel Absolute Radio Frequency Channel Number »).

D'autres objets et caractéristiques de la présente invention apparaîtront à la lecture de la description suivante d'exemples de réalisation, faite en relation avec les dessins ci-annexés dans lesquels:
- la figure 1 rappelle l'architecture générale d'un système de radiocommunications mobiles tel que notamment le système UMTS,
- les figures 2 et 3 sont destinées à illustrer, sur des exemples, le problème résolu par la présente invention,
- la figure 4 est destinée à illustrer un exemple de procédé suivant l'invention.

Les figures 2 et 3 sont destinées à illustrer, sur des exemples, le problème résolu par la présente invention.

Sur la figure 2, on considère le cas d'un appel qui débute dans une cellule 1 appartenant au système UMTS, cette cellule étant contrôlée par un RNC noté RNC1, ou bien le cas d'un appel qui a été transféré vers la cellule 1 à partir de n'importe quelle autre cellule contrôlée par RNC1, et dans laquelle cet appel a débuté. RNC1 a alors le rôle de RNC serveur, ou SRNC, pour cet appel. Tout autre scenario aboutissant à la situation où RNC1 a le rôle de SRNC est également considéré dans cette figure, en particulier le cas d'une procédure dite, en anglais, de « SRNS relocation », telle que spécifiée, pour le système UMTS, dans le document 3GPP TS 25.401 Version 3.4.0 (2000-09).

On considère ensuite le cas où cet appel fait l'objet d'un « soft handover » vers une cellule 2 appartenant également au système UMTS, et contrôlée par un autre RNC, noté RNC2. RNC2 a alors le rôle de RNC dérivé, ou DRNC, pour cet appel.

On considère ensuite le cas où cet appel a besoin d'être transféré vers une cellule 3 voisine de la cellule 2 et appartenant à un autre système, tel que notamment le système GSM, la cellule 3 étant alors contrôlée par un contrôleur de stations de base BSC (pour « Base Station Controller ») de ce système.

Dans ce dernier cas, se pose le problème traité par la présente demande, RNC1 ayant en effet besoin d'informations de voisinage relatives à une cellule 3 voisine d'une cellule serveuse 2 qu'il ne contrôle pas lui-même (puisque la cellule 2 est contrôlée par RNC2) et qui appartient à un autre système.

La figure 3 est destinée à mieux faire ressortir, dans le cas de « handover » inter-système, les inconvénients présentés par la technique antérieure rappelée précédemment, selon laquelle toutes les informations de voisinage nécessaires sont préalablement stockées dans les RNC, pour pouvoir répondre à tous les schémas de « handover » possibles.

Dans l'exemple illustré sur la figure 3, on considère le cas de re-configuration d'un système, consistant dans l'ajout, à un système tel que le système UMTS, d'une cellule d'un autre système tel que notamment le système GSM. Cette cellule GSM est notée A et est voisine d'une cellule UMTS notée B. La cellule A est contrôlée par un contrôleur de station de base (ou BSC, pour « Base Station Controller ») noté BSC1, et la cellule B est contrôlée par un RNC noté RNC11.

Dans ce cas, si toutes les informations de voisinage devaient être stockées dans les RNC, il serait nécessaire de mettre à jour, avec des informations relatives à la cellule A, tous les RNC susceptibles d'avoir un rôle de SRNC pour une communication susceptible d'être transférée vers la cellule B. Un nombre relativement important de RNC devrait alors être mis à jour avec de telles informations, par exemple, comme illustré sur la figure 3, tous les RNC, de RNC1 à RNC11.

La présente invention permet notamment d'éviter ces inconvénients.

D'une manière générale, le procédé suivant l'invention est un procédé pour le transfert de communication inter-système, d'un premier système cellulaire de radiocommunications mobiles utilisant la technique de transmission en macro-diversité, vers un second système cellulaire de radiocommunications mobiles, ladite transmission en macro-diversité dans ledit premier système faisant intervenir un contrôleur de réseau radio, dit contrôleur serveur, et au moins un autre contrôleur de réseau radio, dit contrôleur dérivé.

Suivant l'invention, des informations de voisinage relatives au deuxième système sont signalées audit contrôleur serveur par au moins un contrôleur dérivé contrôlant au moins une cellule serveuse appartenant audit premier système et ayant au moins une cellule voisine appartenant audit second système.

La figure 4 est destinée à illustrer un exemple de mise en oeuvre d'un procédé suivant l'invention, plus particulièrement dans le cas où ledit premier système est le système UMTS et ledit deuxième système est le système GSM.

Le procédé illustré sur la figure 4 comporte les étapes suivantes :
- un message de signalisation M1 est transmis dans le sens SRNC vers UE, et contient notamment la liste des cellules voisines sur lesquelles des mesures radio sont à effectuer par l'UE,
- en réponse au message M1, des mesures radio sont reportées au SRNC par l'UE, dans un message de signalisation M2,
- sur la base des mesures radio ainsi reportées, et dans une étape notée DEC, une décision est prise par le SRNC d'ajouter une nouveau lien radio, c'est-à-dire une nouvelle cellule serveuse, pour la communication considérée, cette nouvelle cellule serveuse étant en l'occurrence contrôlée par un RNC distinct, noté DRNC,
- pour l'établissement d'un nouveau lien radio via cette nouvelle cellule serveuse, un message de signalisation M3 est alors transmis dans le sens SRNC vers DRNC,
- en réponse au message M3, un message M4 est transmis dans le sens DRNC vers SRNC, ce message M4 contenant des informations relatives à des cellules voisines, ces cellules voisines incluant en l'occurrence des cellules GSM si ladite nouvelle cellule serveuse a au moins une cellule voisine appartenant au système GSM,
- après réception par le SRNC du message M4,le SRNC transmet à l'UE un nouveau message de signalisation M1, contenant une liste actualisée de cellules voisines, cette liste actualisée incluant en l'occurrence des cellules GSM, si les informations de voisinage contenues dans le message M4 transmis précédemment par le DRNC au SRNC incluent de telles cellules.

Dans l'exemple d'application considéré :
- le message de signalisation M1 est le message « DCCH measurement control » tel que défini dans le document 3G TS 25.331 publié par le 3GPP (« 3^{rd} Generation Partnership Project »),
- le message de signalisation M2 est le message appelé « DCCH measurement report » tel que défini dans le même document 3G TS 25.331,
- le message de signalisation M3 peut suivant le cas être l'un ou l'autre des messages « Radio Link Setup Request » et « Radio Link Addition Request » prévus par le document 3G TS 25.423 précité,
- le message de signalisation M4 peut suivant le cas être l'un ou l'autre des messages « Radio Link Setup Response », « Radio Link Addition Response », « Radio Link Setup Failure » et « Radio Link Addition Failure » prévus par le même document 3G TS 25.423.

Dans l'exemple d'application considéré, les informations de voisinage comportent en particulier, comme paramètres relatifs à des cellules GSM, des informations telles que par exemple :
- CGI (pour « Cell Global Identification », ou « Cell Global Identity ») tel que défini notamment dans la recommendation GSM 03.03,
- BSIC (pour « Base Station Identity Code » ) tel que défini notamment dans la recommendation GSM 03.03,
- BCCH ARFCN (pour « Broadacst Control Channel Absolute Radio Frequency Channel Number ») tel que défini notamment dans la recommendation GSM 05.05.

Dans cet exemple le couple (BCCH ARFCN, BSIC) est ce que l'on pourrait appeler l'identification radio d'une cellule GSM, alors que le paramètre CGI est ce que l'on pourrait appeler son identification réseau. Le premier sert pour la station mobile à trouver les cellules sur lesquelles elle doit faire des mesures, le second sera fourni par le RNC à son MSC (pour « Mobile Switching Center » , ou centre de commutation mobile, appartenant au coeur de réseau ou « Core Network » CN sur la figure 1) pour qu'il trouve le BSC qui la contrôle. En d'autres termes, pour obtenir les informations de voisinage relatives à une cellule GSM il suffit de donner l'identification de cette cellule, et il n'est pas nécessaire de donner en outre l'identification du BSC qui la contrôle.

La présente invention a également pour objet, outre un tel procédé, un contrôleur de réseau de radiocommunications mobiles, tel que notamment RNC pour un réseau tel que l'UMTS.

Suivant l'invention, ce contrôleur comporte essentiellement des moyens pour, dans le cas où il a un rôle de contrôleur dérivé, signaler à un contrôleur ayant le rôle de contrôleur serveur, des informations relatives à au moins une cellule voisine d'au moins une cellule serveuse qu'il contrôle, et appartenant à un système différent de celui auquel appartient ladite au moins une cellule serveuse.

Suivant l'invention, ce contrôleur comporte essentiellement des moyens pour, dans le cas où il a un rôle de contrôleur serveur, recevoir d'un contrôleur ayant un rôle de contrôleur dérivé, des informations relatives à au moins une cellule voisine d'au moins une cellule serveuse contrôlée par ce contrôleur dérivé, et appartenant à un système différent de celui auquel appartient ladite au moins une cellule serveuse.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour le transfert de communication inter-système, d'un premier système cellulaire de radiocommunications mobiles utilisant la technique de transmission en macro-diversité, vers un second système cellulaire de radiocommunications mobiles, ladite transmission en macro-diversité faisant intervenir un contrôleur de réseau radio du premier système, dit contrôleur serveur, et au moins un autre contrôleur de réseau radio du premier système, dit contrôleur dérivé, ledit procédé étant **caractérisé en ce que** des informations de voisinage relatives au deuxième système sont signalées audit contrôleur serveur par au moins un contrôleur dérivé contrôlant au moins une cellule serveuse appartenant audit premier système et ayant au moins une cellule voisine appartenant audit second système.

2. Procédé selon la revendication 1, **caractérisé en ce que** ledit premier système est un système de type UMTS (« Universal Mobile Telecommunication System »), et lesdites informations de voisinage relatives au deuxième système sont signalées dans un message de type « Radio Link Setup Response».

3. Procédé selon la revendication 1, **caractérisé en ce que** ledit premier système est un système de type UMTS (« Universal Mobile Telecommunication System »), et lesdites informations de voisinage relatives au deuxième système sont signalées dans un message de type « Radio Link Addition Response».

4. Procédé selon la revendication 1, **caractérisé en ce que** ledit premier système est un système de type UMTS (« Universal Mobile Telecommunication System »), et lesdites informations de voisinage relatives au deuxième système sont signalées dans un message de type « Radio Link Setup Failure».

5. Procédé selon la revendication 1, **caractérisé en ce que** ledit premier système est un système de type UMTS (« Universal Mobile Telecommunication System »), et lesdites informations de voisinage relatives au deuxième système sont signalées dans un message de type « Radio Link Addition Failure».

6. Procédé selon l'une des revendications 1 à 5, **caractérisé en ce que** ledit deuxième système est un système de type GSM (« Global System for Mobile communication»), et lesdites informations de voisinage relatives au deuxième système comportent des informations de type CGI (« Cell Global Identity »).

7. Procédé selon l'une des revendications 1 à 5, **caractérisé en ce que** ledit deuxième système est un système de type GSM (« Global System for Mobile communication»), et lesdites informations de voisinage relatives au deuxième système comportent des informations de type BSIC (« Base Station Identity Code »).

8. Procédé selon l'une des revendications 1 à 5, **caractérisé en ce que** ledit deuxième système est un système de type GSM (« Global System for Mobile communication»), et lesdites informations de voisinage relatives au deuxième système comportent des informations de type BCCH ARFCN (« Broadacst Control Channel Absolute Radio Frequency Channel Number »).

9. Contrôleur de réseau de radiocommunications mobiles, pour système cellulaire de radiocommunications mobiles utilisant la technique de transmission en macro-diversité, dit premier système, ladite transmission en macro-diversité faisant intervenir un contrôleur de réseau radio du premier système, dit contrôleur serveur, et au moins un autre contrôleur de réseau radio du premier système, dit contrôleur dérivé, ce contrôleur étant **caractérisé en ce qu'**il comporte des moyens pour, dans le cas où il a un rôle de contrôleur dérivé, signaler à un contrôleur ayant le rôle de contrôleur serveur, des informations de voisinage relatives à au moins une cellule voisine d'au moins une cellule serveuse qu'il contrôle, et appartenant à un système, dit deuxième système, différent de celui auquel appartient ladite au moins une cellule serveuse.

10. Contrôleur de réseau de radiocommunications mobiles, pour système cellulaire de radiocommunications mobiles utilisant la technique de transmission en macro-diversité, dit premier système, ladite transmission en macro-diversité faisant intervenir un contrôleur de réseau radio du premier système, dit contrôleur serveur, et ou moins un autre contrôleur de réseau radio du premier système, dit contrôleur dérivé, ce contrôleur étant essentiellement **caractérisé en ce qu'**il comporte des moyens pour, dans le cas où il a un rôle de contrôleur serveur, recevoir d'un contrôleur ayant un rôle de contrôleur dérivé, des informations de voisinage relatives à au moins une cellule voisine d'au moins une cellule serveuse contrôlée par ce contrôleur dérivé, et appartenant à un système, dit deuxième système, différent de celui auquel appartient ladite au moins une cellule serveuse.

11. Contrôleur selon l'une des revendications 9 et 10, **caractérisé en ce que** ledit premier système est un système de type UMTS (« Universal Mobile Telecommunication System »), et lesdites informations de voisinage relatives au deuxième système sont signalées dans un message de type « Radio Link Setup Response».

12. Contrôleur selon l'une des revendications 9 et 10, **caractérisé en ce que** ledit premier système est un système de type UMTS (« Universal Mobile Telecommunication System »), et lesdites informations de voisinage relatives au deuxième système sont signalées dans un message de type « Radio Link Addition Response».

13. Contrôleur selon l'une des revendications 9 et 10, **caractérisé en ce que** ledit premier système est un système de type UMTS (« Universal Mobile Telecommunication System »), et lesdites informations de voisinage relatives au deuxième système sont signalées dans un message de type « Radio Link Setup Failure».

14. Contrôleur selon l'une des revendications 9 et 10, **caractérisé en ce que** ledit premier système est un système de type UMTS (« Universal Mobile Telecommunication System »), et lesdites informations de voisinage relatives au deuxième système sont signalées dans un message de type « Radio Link Addition Failure».

15. Contrôleur selon l'une des revendications 9 à 14, **caractérisé en ce que** ledit deuxième système est un système de type GSM (« Global System for Mobile communication»), et lesdites informations de voisinage relatives au deuxième système comportent des informations de type CGI (« Cell Global Identity »).

16. Contrôleur selon l'une des revendications 9 à 14, **caractérisé en ce que** ledit deuxième système est un système de type GSM (« Global System for Mobile communication»), et lesdites informations de voisinage relatives au deuxième système comportent des informations de type BSIC (« Base Station Identity Code »).

17. Contrôleur selon l'une des revendications 9 à 14, **caractérisé en ce que** ledit deuxième système est un système de type GSM (« Global System for Mobile communication»), et lesdites informations de voisinage relatives au deuxième système comportent des informations de type BCCH ARFCN (« Broadacst Control Channel Absolute Radio Frequency Channel Number »).

## Claims

1. A method for inter-system communication transfer, from a first cellular mobile radio communications system using the macro-diversity transmission technique, to a second cellular mobile radio communications system, said macro-diversity transmission involving a radio network controller of the first system, referred to as serving controller, and at least one other radio network controller of the first system, referred to as drift controller, said method being **characterized in that** neighbor information related to the second system is signaled to said serving controller by at least one drift controller controlling at least one serving cell belonging to said first system and having at least one neighboring cell belonging to said second system.

2. A method according to claim 1, **characterized in that** said first system is a system of UMTS ("Universal Mobile Telecommunication System") type, and said neighbor information related to the second system is signaled in a message of "Radio Link Setup Response" type.

3. A method according to claim 1, **characterized in that** said first system is a system of UMTS ("Universal Mobile Telecommunication System") type, and said neighbor information related to the second system is signaled in a message of "Radio Link Addition Response" type.

4. A method according to claim 1, **characterized in that** said first system is a system of UMTS ("Universal Mobile Telecommunication System") type, and said neighbor information related to the second system is signaled in a message of "Radio Link Setup Failure" type.

5. A method according to claim 1, **characterized in that** said first system is a system of UMTS ("Universal Mobile Telecommunication System") type, and said neighbor information related to the second system is signaled in a message of "Radio Link Addition Failure" type.

6. A method according to one of claims 1 to 5, **characterized in that** said second system is a system of GSM ("Global System for Mobile communication") type, and said neighbor information related to the second system comprises information of CGI ("Cell Global Identity") type.

7. A method according to one of claims 1 to 5, **characterized in that** said second system is a system of GSM ("Global System for Mobile communication") type, and said neighbor information related to the second system comprises information of BSIC ("Base Station Identity Code") type.

8. A method according to one of claims 1 to 5, **characterized in that** said second system is a system of GSM ("Global System for Mobile communication") type, and said neighbor information related to the second system comprises information of BCCH ARFCN ("Broadcast Control Channel Absolute Radio Frequency Channel Number") type.

9. A mobile radio communications network controller, for a cellular mobile radio communications system using the macro-diversity transmission technique, referred to as first system, said macro-diversity transmission involving a radio network controller of the first system, referred to as serving controller, and at least one other radio network controller of the first system, referred to as drift controller, this controller being **characterized in that** it comprises means for, if it has a drift controller role, signaling to a controller having a serving controller role, neighbor information related to at least one neighboring cell of at least one serving cell that it controls, and belonging to a system, referred to as second system, different of the one to which said at least one serving cell belongs.

10. A mobile radio communications network controller, for a cellular mobile radio communications system, referred to as first system, using the macro-diversity transmission technique, said macro-diversity transmission involving a radio network controller of the first system, referred to as serving controller, and at least one other radio network controller of the first system, referred to as drift controller, this controller being **characterized in that** it comprises means for, if it has a serving controller role, receiving, from a controller having a drift controller role, neighbor information related to at least one neighboring cell of at least one serving cell controlled by that drift controller, and belonging to a system, referred to as second system, different of the one to which said at least one serving cell belongs.

11. A controller according to one of claims 9 and 10, **characterized in that** said first system is a system of UMTS ("Universal Mobile Telecommunication System") type, and said neighbor information related to the second system is signaled in a message of "Radio Link Setup Response" type.

12. A controller according to one of claims 9 and 10, **characterized in that** said first system is a system of UMTS ("Universal Mobile Telecommunication System") type, and said neighbor information related to the second system is signaled in a message of "Radio Link Addition Response" type.

13. A controller according to one of claims 9 and 10, **characterized in that** said first system is a system of UMTS ("Universal Mobile Telecommunication System") type, and said neighbor information related to the second system is signaled in a message of "Radio Link Setup Response" type.

14. A controller according to one of claims 9 and 10, **characterized in that** said first system is a system of UMTS ("Universal Mobile Telecommunication System") type, and said neighbor information related to the second system is signaled in a message of "Radio Link Addition Failure" type.

15. A controller according to one of claims 9 to 14, **characterized in that** said second system is a system of GSM ("Global System for Mobile communication") type, and said neighbor information related to the second system comprises information of CGI ("Cell Global Identity") type.

16. A controller according to one of claims 9 to 14, **characterized in that** said second system is a system of GSM ("Global System for Mobile communication") type, and said neighbor information related to the second system comprises information of BSIC ("Base Station Identity Code") type.

17. A controller according to one of claims 9 to 14, **characterized in that** said second system is a system of GSM ("Global System for Mobile communication") type, and said neighbor information related to the second system comprises information of BCCH ARFCN ("Broadcast Control Channel Absolute Radio Frequency Channel Number") type.

## Patentansprüche

1. Verfahren zur Übertragung einer Zwischensystemkommunikation von einem ersten Zellularsystem für die Mobilfunkkommunikation, welches die Technik der Übertragung im Macro-Diversity-Zustand verwendet, an ein zweites Zellularsystem für die Mobüfunkkommunikation, wobei die besagte Übertragung im Macro-Diversity-Zustand eine Funknetzwerk-Steuereinrichtung, bedienende Steuereinrichtung genannt, des ersten Systems und mindestens eine weitere Funknetzwerk-Steuereinrichtung, derivative Steuereinrichtung genannt, des ersten Systems einsetzt, wobei das besagte Verfahren **dadurch gekennzeichnet ist, dass** Nachbarschaftsinformationen in Bezug auf das zweite System durch mindestens eine derivative Steuereinrichtung, welche mindestens eine bedienende Zelle, die dem besagten ersten System angehört, kontrolliert und mindestens eine Nachbarzelle, welche dem besagten zweiten System angehört, hat, an die besagte bedienende Steuereinrichtung signalisiert werden.

2. Verfahren nach Anspruch 1, **dadurch gekennzeichnet, dass** das besagte erste System ein System vom Typ UMTS ("Universal Mobile Telecommunication System") ist und die besagten das zweite System betreffenden Nachbarschaftsinformationen in einer Nachricht vom Typ "Radio Link Setup Response" signalisiert werden.

3. Verfahren nach Anspruch 1, **dadurch gekennzeichnet, dass** das besagte erste System ein System vom Typ UMTS ("Universal Mobile Telecommunication System") ist und die besagten das zweite System betreffenden Nachbarschaftsinformationen in einer Nachricht vom Typ "Radio Link Addition Response" signalisiert werden.

4. Verfahren nach Anspruch 1, **dadurch gekennzeichnet, dass** das besagte erste System ein System vom Typ UMTS ("Universal Mobile Telecommunication System") ist und die besagten das zweite System betreffenden Nachbarschaftsinformationen in einer Nachricht vom Typ "Radio Link Setup Failure" signalisiert werden.

5. Verfahren nach Anspruch 1, **dadurch gekennzeichnet, dass** das besagte erste System ein System vom Typ UMTS ("Universal Mobile Telecommunication System") ist und die besagten das zweite System betreffenden Nachbarschaftsinformationen in einer Nachricht vom Typ "Radio Link Addition Failure" signalisiert werden.

6. Verfahren nach einem der Ansprüche 1 bis 5, **dadurch gekennzeichnet, dass** das besagte zweite System ein System vom Typ GSM ("Global System for Mobile communication") ist und die besagten das zweite System betreffenden Nachbarschaftsinformationen Informationen vom Typ CGI ("Cell Global Identity") enthalten.

7. Verfahren nach einem der Ansprüche 1 bis 5, **dadurch gekennzeichnet, dass** das besagte zweite System ein System vom Typ GSM ("Glabal System for Mobile communication") ist und die besagten das zweite System betreffenden Nachbarschaftsinformationen Informationen vom Typ BSIC ("Base Station Identity Code") enthalten.

8. Verfahren nach einem der Ansprüche 1 bis 5, **dadurch gekennzeichnet, dass** das besagte zweite System ein System vom Typ GSM ("Global System for Mobile communication") ist und die besagten das zweite System betreffenden Nachbarschaftsinformationen Informationen vom Typ BCCH ARFCN ("Broadcast Control Channel Absolute Radio Frequency Channel Number") enthalten.

9. Mobilfunkkommunikationsnetzwerk-Steuereinrichtung für ein Zellularsystem für die Mobilfunkkommunikation, welches die Technik der Übertragung im Macro-Diversity-Zustand verwendet, erstes System genannt, wobei die besagte Übertragung im Macro-Diversity-Zustand eine Funknetzwerk-Steuereinrichtung, bedienende Steuereinrichtung genannt, des ersten Systems und mindestens eine weitere Funknetzwerk-Steuereinrichtung, derivative Steuereinrichtung genannt, des ersten Systems einsetzt, wobei diese Steuereinrichtung **dadurch gekennzeichnet ist, dass** sie Mittel umfasst, um, wenn sie als derivative Steuereinrichtung fungiert, Nachbarschaftsinformationen in Bezug auf mindestens eine benachbarte Zelle mindestens einer von ihr kontrollierten bedienenden Zelle, welche einem anderen System, zweites System genannt, angehört als das System, welchem die besagte mindestens eine bedienende Zelle angehört, an eine Steuereinrichtung, welche als bedienende Steuereinrichtung fungiert, zu signalisieren.

10. Mobilfunkkommunikationsnetzwerk-Steuereinrichtung für ein Zellularsystem für die Mobilfunkkommunikation, welches die Technik der Übertragung im Macro-Diversity-Zustand verwendet, erstes System genannt, wobei die besagte Übertragung im Macro-Diversity-Zustand eine Funknetzwerk-Steuereinrichtung, bedienende Steuereinrichtung genannt, des ersten Systems und mindestens eine weitere Funknetzwerk-Steuereinrichtung, derivative Steuereinrichtung genannt, des ersten Systems einsetzt, wobei diese Steuereinrichtung **dadurch**
**gekennzeichnet ist, dass** sie Mittel umfasst, um, wenn sie als bedienende Steuereinrichtung fungiert, Nachbarschaftsinformationen in Bezug auf mindestens eine benachbarte Zelle mindestens einer von ihr kontrollierten bedienenden Zelle, welche einem anderen System, zweites System genannt, angehört als das System, welchem die besagte mindestens eine bedienende Zelle angehört, von einer Steuereinrichtung, welche als derivative Steuereinrichtung fungiert, zu empfangen.

11. Steuereinrichtung nach einem der Ansprüche 9 und 10, **dadurch gekennzeichnet, dass** das besagte erste System ein System vom Typ UMTS ("Universal Mobile Telecommunication System") ist und die besagten das zweite System betreffenden Nachbarschaftsinformationen in einer Nachricht vom Typ "Radio Link Setup Response" signalisiert werden.

12. Steuereinrichtung nach einem der Ansprüche 9 und 10, **dadurch gekennzeichnet, dass** das besagte erste System ein System vom Typ UMTS ("Universal Mobile Telecommunication System") ist und die besagten das zweite System betreffenden Nachbarschaftsinformationen in einer Nachricht vom Typ "Radio Link Addition Response" signalisiert werden.

13. Steuereinrichtung nach einem der Ansprüche 9 und 10, **dadurch gekennzeichnet, dass** das besagte erste System ein System vom Typ UMTS ("Universal Mobile Telecommunication System") ist und die besagten das zweite System betreffenden Nachbarschaftsinformationen in einer Nachricht vom Typ "Radio Link Setup Failure" signalisiert werden.

14. Steuereinrichtung nach einem der Ansprüche 9 und 10, **dadurch gekennzeichnet, dass** das besagte erste System ein System vom Typ UMTS ("Universal Mobile Telecommunication System") ist und die besagten das zweite System betreffenden Nachbarschaftsinformationen in einer Nachricht vom Typ "Radio Link Addition Failure" signalisiert werden.

15. Steuereinrichtung nach einem der Ansprüche 9 bis 14, **dadurch gekennzeichnet, dass** das besagte zweite System ein System vom Typ GSM ("Global System for Mobile communication") ist und die besagten das zweite System betreffenden Nachbarschaftsinformationen Informationen vom Typ CGI ("Cell Global Identity") enthalten.

16. Steuereinrichtung nach einem der Ansprüche 9 bis 14, **dadurch gekennzeichnet, dass** das besagte zweite System ein System vom Typ GSM ("Global System for Mobile communication") ist und die besagten das zweite System betreffenden Nachbarschaftsinformationen Informationen vom Typ BSIC ("Base Station Identity Code") enthalten.

17. Steuereinrichtung nach einem der Ansprüche 9 bis 14, **dadurch gekennzeichnet, dass** das besagte zweite System ein System vom Typ GSM ("Global System for Mobile communication") ist und die besagten das zweite System betreffenden Nachbarschaftsinformationen Informationen vom Typ BCCH ARFCN ("Broadcast Control Channel Absolute Radio Frequency Channel Number") enthalten.
